# DEMANDE DE BREVET EUROPEEN

(11) **EP 2 163 703 A1**
(43) Date de publication de la demande: **17.03.2010**
(21) Numéro de dépôt: 09167554.6
(22) Date de dépôt: 10.08.2009
(51) Int. Cl.: E04F 11/18

(54) **Dispositif de jonction à degré variable entre deux profilés creux**

(30) Priorité: 11.09.2008 FR 0804998
(71) Demandeur: DANI ALU, 69280 Sainte Consorce (FR)
(72) Inventeur: Laffay, Serge, 69340, Francheville (FR); Duplat, Bruno, 69340, Francheville (FR)
(74) Mandataire: Chevalier, Renaud Philippe

(57) **Abrégé**

Dispositif (1) de jonction à degré variable entre deux profilés (8) creux, ledit dispositif (1) comprenant deux bras (2) présentant respectivement des première (21) et deuxième (22) extrémités opposées, dans lequel les bras (2) sont montés pivotant l'un par rapport à l'autre au niveau de leurs premières extrémités (21), et dans lequel chaque bras (2) est destiné à être fixé dans le profilé (8) correspondant au niveau de sa deuxième extrémité (22).

Le dispositif (1) selon l'invention est remarquable en ce que l'un au moins desdits bras (2) supporte, au niveau de sa deuxième extrémité (22), deux pièces biseautées (3, 4) en appui l'une contre l'autre par leurs surfaces inclinées (30, 40) respectives et conformées pour coulisser l'une par rapport à l'autre pour être verrouillées en force par écartement à l'intérieur du profilé (8) correspondant.

La présente invention trouve une application dans les assemblages de garde-corps employés dans le domaine du bâtiment pour assurer la sécurisation des personnes situées sur des ouvrages en hauteur.

## Description

La présente invention se rapporte à un dispositif de jonction à degré variable entre deux profilés creux, utilisable notamment dans la jonction de lisses ou barres pour un assemblage de garde-corps.

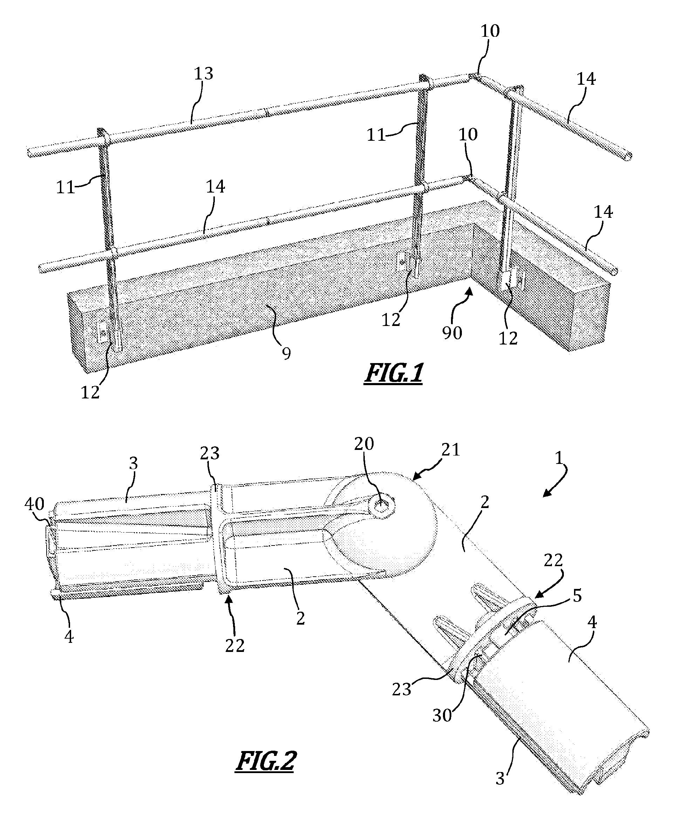

De façon connue et comme illustré en figure 1, un assemblage de garde-corps est employé dans le domaine du bâtiment pour assurer la sécurisation des personnes situées sur des ouvrages 9 en hauteur, du type terrasse ou toiture par exemple.

Un assemblage de garde-corps s'étend ainsi le long des bordures de terrasse ou de toiture, et comprend une succession de montants 11 fixés sur l'ouvrage 9 au moyen de sabots de garde-corps 12 généralement vissés dans ledit ouvrage 9. Il est également d'usage de prévoir entre les montants 11 une ou plusieurs lisses (autrement appelées barres ou barreaux) 13, 14, comme par exemple une lisse haute 13 rapportée au niveau des extrémités supérieures libres des montants 11 et formant une main courante et éventuellement une ou plusieurs lisses basses ou intermédiaires 14 disposées sous la lisse haute 13. De telles lisses de garde-corps sont généralement réalisées sous la forme de profilé tubulaire, autrement dit de profilé creux à section cylindrique.

Au niveau des angles ou coins 90 de l'ouvrage 9 en hauteur, il est nécessaire de joindre les lisses successives par un dispositif de jonction 10 à degré variable, notamment deux lisses hautes 13 successives et deux lisses basses ou intermédiaires 14 successives. En effet, il est avantageux de conserver une continuité entre les lisses pour des raisons à la fois de sécurité et d'esthétique ; un tel dispositif de jonction 10 permettant de joindre entre elles deux lisses inclinées l'une par rapport à l'autre.

De façon connue, un dispositif de jonction à degré variable comprend deux bras présentant respectivement des première et deuxième extrémités opposées, dans lequel les bras sont montés pivotant l'un par rapport à l'autre au niveau de leurs premières extrémités, et dans lequel chaque bras est destiné à être fixé dans la lisse correspondante au niveau de sa deuxième extrémité. Ainsi, l'inclinaison entre les bras est réglée et fixée conformément à l'inclinaison entre les lisses, et ensuite les bras sont respectivement insérés et fixés dans les lisses pour assurer la jonction entre ces deux dernières.

Classiquement, les bras sont insérés dans les lisses et fixés dans ces dernières au moyen d'un rivet ; des orifices étant spécifiquement prévus pour cet usage dans les bras et dans les lisses. Une telle fixation est peu pratique car elle nécessite, d'une part, de retoucher les lisses en ménageant des orifices de passage du rivet, et d'autre part, de procéder, lors du montage, à un alignement correct des orifices des respectivement bras et lisse afin de permettre le passage du rivet. Le montage de ces dispositifs de jonction est en outre particulièrement long avec son étape d'alignement ou d'indexation préalable des bras et lisses.

La présente invention a notamment pour but de résoudre en tout ou partie ces inconvénients et propose à cet effet un dispositif de jonction à degré variable entre deux profilés creux, notamment des lisses ou barres pour assemblage de garde-corps, ledit dispositif comprenant deux bras présentant respectivement des première et deuxième extrémités opposées, dans lequel les bras sont montés pivotant l'un par rapport à l'autre au niveau de leurs premières extrémités, et dans lequel chaque bras est destiné à être fixé dans le profilé correspondant au niveau de sa deuxième extrémité, le dispositif de jonction étant remarquable en ce que l'un au moins desdits bras supporte, au niveau de sa deuxième extrémité, deux pièces biseautées en appui l'une contre l'autre par leurs surfaces inclinées respectives et conformées pour coulisser l'une par rapport à l'autre pour être verrouillées en force par écartement à l'intérieur du profilé correspondant.

Ainsi, la jonction d'au moins un bras au niveau de l'un des profilés creux s'effectue au moyen des deux pièces biseautées (ou pièces en forme de coin) qui viennent se serrer à l'intérieur dudit profilé. Pour ce faire, les deux pièces biseautées viennent d'une part en appui l'une contre l'autre par leurs surfaces inclinées respectives, et d'autre part en appui contre la paroi interne dudit profilé suite à un coulissement relatif desdits pièces biseautées le long de leurs surfaces inclinées ; ledit coulissement conduisant à un écartement des deux pièces biseautées afin que ces dernières se pressent contre la paroi interne du profilé et ainsi se verrouillent en force dans ledit profilé.

Un tel dispositif de jonction présente l'avantage de simplifier et de gagner du temps dans le montage/démontage ; l'opération de montage consistant par exemple à simplement positionner les deux pièces biseautées dans le profilé correspondant, sans nécessité de centrage ou indexage, et ensuite à faire coulisser les deux pièces biseautées et à les verrouiller en force à l'intérieur dudit profilé.

Dans un mode de réalisation avantageux de l'invention, une première pièce biseautée est solidaire de la deuxième extrémité du bras, tandis que la deuxième pièce biseautée est coulissante par rapport à la première pièce biseautée.

Ainsi, la première pièce biseautée n'est pas une pièce flottante car elle est solidarisée au bras tandis que la deuxième pièce biseautée est apte à coulisser relativement à ladite première pièce biseautée ; les deux dites pièces biseautées étant reliées entre elles par un moyen d'actionnement apte à entraîner en coulissement ladite deuxième pièce biseautée et à la bloquer (ou verrouiller) en position relativement à la première pièce biseautée afin de maintenir le verrouillage des deux pièces biseautées dans le profilé. Une telle configuration permet d'avoir un moyen d'actionnement aisément accessible de l'extérieur, et non de l'intérieur du profilé creux, pour permettre un verrouillage simple et rapide des deux pièces biseautées dans le profilé.

Dans une certaine réalisation, un orifice fileté est ménagé dans la deuxième pièce biseautée, et une vis coopère avec ledit orifice fileté pour déplacer ladite deuxième pièce biseautée en coulissement relativement à la première pièce biseautée.

Ainsi, dans cette réalisation, le moyen d'actionnement est réalisé sous la forme d'une vis, où la vis est aisément accessible de l'extérieur ; ladite vis présentant une tête de vis faisant saillie à l'extérieur du profilé pour un accès facile à un outil de vissage.

Cette vis s'étend avantageusement selon la direction longitudinale du bras, et donc du profilé une fois la jonction faite, de sorte qu'aucune pièce (tel qu'un rivet) ne traverse la paroi du profilé (selon une direction transversale audit profilé) et qu'ainsi le profilé offre une paroi lisse sur toute sa longueur, sans aspérité ni saillie, avec un avantage à la fois en terme de sécurité pour une personne qui pose et glisse sa main sur le profilé, et en terme esthétique.

Conformément à d'autres caractéristiques avantageuses de l'invention :
- une butée transversale est prévue au niveau de la deuxième extrémité du bras, et la vis traverse ladite butée transversale pour coopérer avec l'orifice fileté de la deuxième pièce biseautée ;
- les surfaces inclinées des pièces biseautées sont orientées de sorte que le vissage de la vis à l'intérieur de l'orifice fileté de la deuxième pièce biseautée, conduit à rapprocher la deuxième pièce biseautée de la butée transversale et à verrouiller les pièces biseautées à l'intérieur du profilé ;
- la butée transversale est conçue pour venir en appui contre l'extrémité ouverte du profilé correspondant une fois les pièces biseautées verrouillées à l'intérieur dudit profilé ;
- la vis comporte, d'une part une tige filetée traversant la butée transversale pour coopérer avec l'orifice fileté de la deuxième pièce biseautée, et d'autre part une tête de vis conçue pour coopérer avec un outil de vissage et adaptée pour venir en appui contre ladite butée transversale une fois les pièces biseautées verrouillées à l'intérieur dudit profilé ;
- la première pièce biseautée fait saillie de la butée transversale et s'étend dans le prolongement du bras selon la direction longitudinale du bras.

Selon une caractéristique, les pièces biseautées sont coulissantes l'une par rapport à l'autre dans la direction longitudinale du bras.

L'invention se rapporte également à un assemblage de garde-corps comprenant un dispositif de jonction à degré variable conforme à l'invention.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue en perspective d'un assemblage de garde-corps pouvant intégrer un dispositif de jonction à degré variable conforme à l'invention ;
- la figure 2 est une vue en perspective d'un dispositif de jonction conforme à l'invention ;
- la figure 3 est une vue en perspective du dispositif de jonction illustré en figure 1 où l'un des bras est verrouillé dans un profilé ;
- la figure 4 est une vue de côté du dispositif de jonction verrouillé dans un profilé et illustré en figure 3 ;
- les figures 5 et 6 illustrent les étapes de montage du dispositif de jonction conforme à l'invention dans deux profilés.

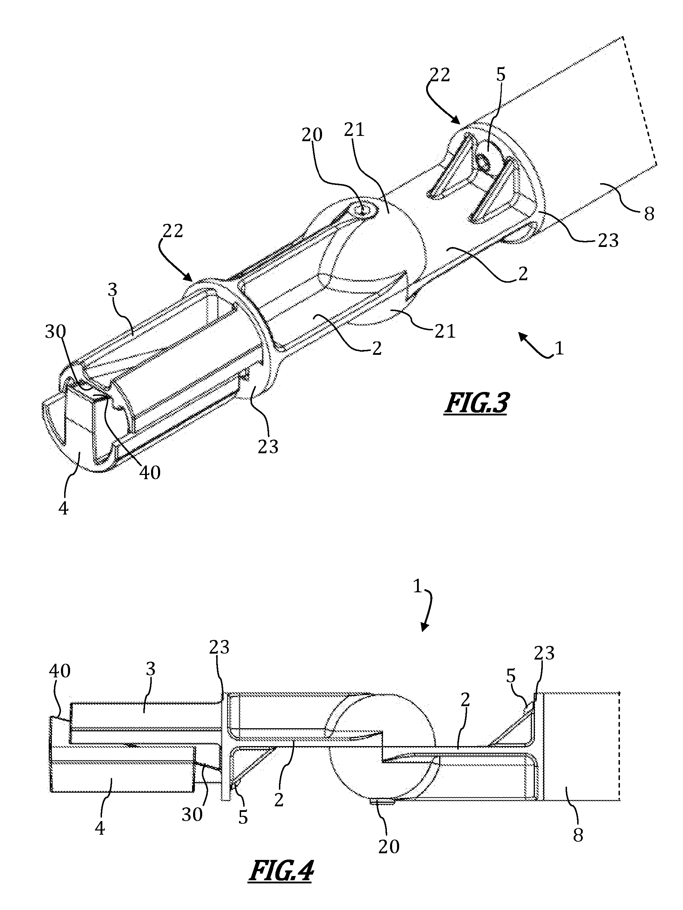

Un dispositif de jonction 1 conforme à l'invention est décrit ci-après en référence aux figures 2 à 6 ; un tel dispositif de jonction 1 pouvant être employé pour réaliser la jonction entre deux lisses de garde-corps dans un assemblage de garde-corps tel qu'illustré, par exemple, en figure 1. De manière générale, le dispositif de jonction 1 a pour but de joindre deux profilés 8 creux entre eux ; les deux dits profilés 8 étant inclinés l'un par rapport à l'autre selon un angle prédéterminé.

Le dispositif de jonction 1 comporte deux bras 2 montés à pivot l'un par rapport à l'autre autour d'un axe de pivotement 20 et réglables angulairement. Chaque bras 2 présente une première extrémité 21 articulée à la première extrémité de l'autre bras 2 autour de l'axe de pivotement 20, et une deuxième extrémité 22 destinée à coopérer avec le profilé 8 correspondant afin de fixer, de façon amovible, ledit bras 2 dans ledit profilé 8.

L'axe de pivotement 20 est réalisé sous la forme d'une vis afin de pouvoir verrouiller angulairement les deux bras 2 ; l'angle ou inclinaison entre les deux bras 2 étant réglable afin de pouvoir adapter ledit angle entre les deux bras 2 à l'angle entre les deux profilés 8. Ainsi, dans un premier temps, l'angle entre les deux bras 2 est réglé afin d'aligner chaque bras 2 avec le profilé 8 correspondant. Ensuite, dans un deuxième temps, les bras 2 sont serrés l'un contre l'autre par la vis 20 afin de bloquer les bras 2 dans la position angulaire souhaitée.

Chaque bras 2 supporte, au niveau de sa deuxième extrémité 22, deux pièces biseautées, respectivement une première 3 et une deuxième 4 pièces biseautées, en appui l'une contre l'autre par leurs surfaces inclinées 30, 40 respectives et conformées pour coulisser l'une par rapport à l'autre pour être verrouillées en force par écartement à l'intérieur du profilé 8 correspondant. Les deux bras 2 étant identiques, la suite de la description ne portera que sur un seul des deux bras 2.

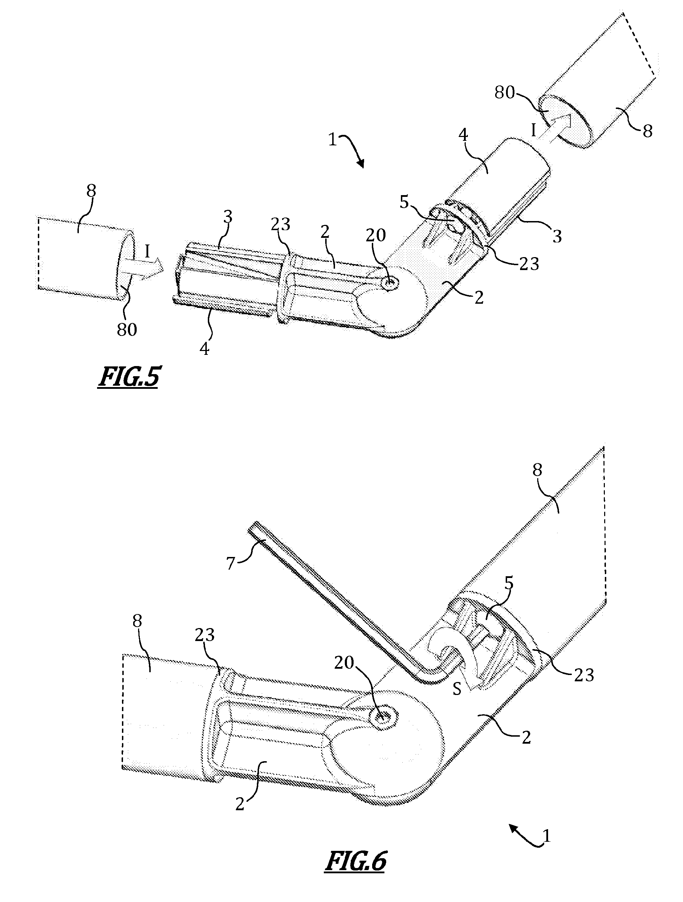

La première pièce biseautée 3 est solidaire du bras 2, au niveau de sa deuxième extrémité 22, et s'étend selon la direction longitudinale du bras 2 ; autrement dit, la première pièce biseautée 3 et le bras 2 sont alignés. Le bras 2 présente une butée transversale 23 destinée à venir en butée contre l'extrémité ouverte 80 (visible en figure 5) du profilé 8 correspondant et éventuellement à boucher ladite extrémité ouverte 80 du profilé 8 pour des raisons d'étanchéité. Cette butée 23 est dite transversale dans le sens où elle s'étend dans un plan transversal, en l'occurrence perpendiculaire, à la direction longitudinale du bras 2.

La première pièce biseautée 3 fait saillie perpendiculairement de ladite butée transversale 23, et sa surface inclinée 30 est orientée dans le sens de la diminution de l'épaisseur de ladite première pièce biseautée 3 en s'éloignant de ladite butée transversale 23. Autrement dit, la première pièce biseautée 3 est plus large ou épaisse au niveau de la butée transversale 23 qu'au niveau de son extrémité libre.

Une deuxième pièce biseautée 4 présente une surface inclinée 40 en appui contre la surface inclinée 30 de la première pièce biseautée 3, où ladite deuxième pièce biseautée 4 est apte à coulisser par rapport à la première pièce biseautée 3 le long de leurs surfaces inclinées 30, 40 respectives. Le coulissement de la deuxième pièce biseautée 4 relativement à la première pièce biseautée 3 conduit à la diminution ou à l'augmentation des dimensions transversales de l'ensemble formée par ces deux pièces biseautées 3, 4, suivant le sens de coulissement. En l'occurrence, l'éloignement de la deuxième pièce biseautée 4 vis-à-vis de la butée transversale 23 conduit à une diminution desdites dimensions transversales, afin par exemple de permettre l'insertion desdites pièces biseautées 3, 4 dans le profilé 8. A l'inverse, le rapprochement de la deuxième pièce biseautée 4 vis-à-vis de la butée transversale 23 conduit à une augmentation desdites dimensions transversales, afin de serrer les deux dites pièces biseautées 3, 4 par écartement dans le profilé 8.

Les deux pièces biseautées 3, 4 présentent chacun une surface latérale externe de forme sensiblement complémentaire à la forme interne du profilé 8 creux, afin d'épouser au mieux la paroi interne dudit profilé 8 lorsqu'elles sont pressées contre ladite paroi interne dudit profilé 8 pour verrouiller en force le bras 2 dans ledit profilé 8. En l'occurrence, le profilé 8 étant de section cylindrique, les deux pièces biseautées 3, 4 présentent chacun une surface latérale externe sensiblement convexe, voire en partie cylindrique. Dans ce cas, les dimensions transversales susmentionnées correspondent sensiblement à un diamètre.

Pour permettre le déplacement de la deuxième pièce biseautée 4 et le verrouillage de ladite deuxième pièce biseautée 4 dans une position de serrage à l'intérieur du profilé 8, le dispositif de jonction 1 comprend une vis 5 traversant la butée transversale 32 du bras 2 et coopérant par vissage avec la deuxième pièce biseautée 4. A cet effet, la butée transversale 32 présente un orifice traversant (non visible) disposé à l'opposé de la première pièce biseautée 3 relativement au bras 2. De plus, la deuxième pièce biseautée 3 présente un orifice fileté borgne (non visible) s'étendant selon la direction longitudinale du bras 2 et destiné à recevoir ladite vis 5.

Ainsi, suivant le sens de rotation de la vis 5, cette dernière éloigne ou rapproche la deuxième pièce biseautée 4 de la butée transversale 32, avec les effets susmentionnés relatifs à la variation des dimensions transversales. Un passage pour la vis 5 peut également être ménagé dans la première pièce biseautée 3 si besoin est.

La vis 5 comporte une tige filetée traversant la butée transversale pour coopérer avec l'orifice fileté de la deuxième pièce biseautée 4, et également une tête de vis conçue pour coopérer avec un outil de vissage (comme illustré en figure 6) et adaptée pour venir en appui contre la butée transversale 23 une fois les pièces biseautées 3, 4 verrouillées à l'intérieur du profilé 8. Ainsi, la tête de vis est facilement accessible pour un outil de vissage, simplifiant le montage et le démontage du dispositif de jonction 1.

Le montage du dispositif de jonction 1 est décrit ci-après, en référence aux figures 5 et 6.

Initialement, et comme illustré en figure 5, les vis 5 sont suffisamment desserrées pour que les deux pièces biseautées 3, 4 puissent être insérées à l'intérieur des profilés 8 via leurs extrémités ouvertes 80 respectives (lesdites insertions étant illustrées par les flèches I). Les vis 5 sont en effet desserrées afin que la deuxième pièce biseautée 4 soit suffisamment éloignée de la première pièce biseautée 3 pour que le diamètre des pièces biseautées 3, 4 soit inférieur au diamètre interne des profilés 8.

Ensuite, et comme illustré en figure 6, les pièces biseautées 3, 4 sont insérées dans les profilés 8 jusqu'à ce que chaque butée transversale 23 soit en appui contre l'extrémité ouverte du profilé 8 correspondant, puis chaque vis 5 est serrée au moyen d'un outil de vissage 7 (ledit serrage étant illustré par la flèche S) pour faire coulisser la deuxième pièce biseautée 4 correspondante dans le sens d'un rapprochement avec la butée transversale 23, jusqu'à ce que les deux pièces biseautées 3, 4 soient suffisamment pressées contre la paroi interne du profilé 8 correspondant et assurent un verrouillage en force par écartement à l'intérieur dudit profilé 8.

Le dispositif de jonction 1 est dont particulièrement adapté pour obtenir des fixations amovibles des bras 2 dans les profilés 8, avec des montages et démontages aisés et rapides. Les vis 5 sont accessibles pour les opérations de serrage et de desserrage. En outre, les vis 5 font saillie des butées transversales 32 respectives, et aucun organe ne traverse les parois des profilés 8 pour les jonctions avec les bras 2 respectifs, de sorte que les profilés 8 conservent une surface lisse, sans aspérité ni saillie.

Bien entendu l'exemple de mise en oeuvre évoqué ci-dessus ne présente aucun caractère limitatif et d'autres détails et améliorations peuvent être apportés au dispositif de jonction selon l'invention, sans pour autant sortir du cadre de l'invention où d'autres formes de pièces biseautées peuvent par exemple être réalisées. Il est ainsi envisageable de prévoir un dispositif de jonction où les pièces biseautées présentent des surfaces inclinées inversées par rapport au dispositif de jonction décrit ci-dessus, dans le sens où un éloignement de la deuxième pièce biseautée vis-à-vis de la butée transversale conduirait à une augmentation des dimensions transversales afin de serrer les deux dites pièces biseautées par écartement à l'intérieur du profilé 8.

## Revendications

1. Dispositif (1) de jonction à degré variable entre deux profilés (8) creux, ledit dispositif (1) comprenant deux bras (2) présentant respectivement des première (21) et deuxième (22) extrémités opposées, dans lequel les bras (2) sont montés pivotant l'un par rapport à l'autre au niveau de leurs premières extrémités (21), et dans lequel chaque bras (2) est destiné à être fixé dans le profilé (8) correspondant au niveau de sa deuxième extrémité (22), **caractérisé en ce que** l'un au moins desdits bras (2) supporte, au niveau de sa deuxième extrémité (22), deux pièces biseautées (3, 4) en appui l'une contre l'autre par leurs surfaces inclinées (30, 40) respectives et conformées pour coulisser l'une par rapport à l'autre pour être verrouillées en force par écartement à l'intérieur du profilé (8) correspondant.

2. Dispositif (1) selon la revendication 1, dans lequel une première pièce biseautée (3) est solidaire de la deuxième extrémité (22) du bras (2), tandis que la deuxième pièce biseautée (4) est coulissante par rapport à la première pièce biseautée (3).

3. Dispositif (1) selon la revendication 2, dans lequel un orifice fileté est ménagé dans la deuxième pièce biseautée (4), et dans lequel une vis (5) coopère avec ledit orifice fileté pour déplacer ladite deuxième pièce biseautée (4) en coulissement relativement à la première pièce biseautée (3).

4. Dispositif (1) selon la revendication 3, dans lequel une butée transversale (23) est prévue au niveau de la deuxième extrémité (22) du bras (2), et dans lequel ladite vis (5) traverse ladite butée transversale pour coopérer avec l'orifice fileté de la deuxième pièce biseautée (4).

5. Dispositif (1) selon la revendication 4, dans lequel les surfaces inclinées (30, 40) des pièces biseautées (3, 4) sont orientées de sorte que le vissage de la vis (5) à l'intérieur de l'orifice fileté de la deuxième pièce biseautée (4), conduit à rapprocher la deuxième pièce biseautée (4) de la butée transversale (23) et à verrouiller les pièces biseautées (3, 4) à l'intérieur du profilé (8).

6. Dispositif (1) selon les revendications 4 ou 5, dans lequel la butée transversale (23) est conçue pour venir en appui contre l'extrémité ouverte (80) du profilé (8) correspondant une fois les pièces biseautées (3, 4) verrouillées à l'intérieur dudit profilé (8).

7. Dispositif (1) selon l'une quelconque des revendications 4 à 6, dans lequel la vis (5) comporte d'une part une tige filetée traversant la butée transversale pour coopérer avec l'orifice fileté de la deuxième pièce biseautée (4), et d'autre part une tête de vis conçue pour coopérer avec un outil de vissage (7) et adaptée pour venir en appui contre ladite butée transversale (23) une fois les pièces biseautées (3, 4) verrouillées à l'intérieur dudit profilé (8).

8. Dispositif (1) selon l'une quelconque des revendications 4 à 7, dans lequel la première pièce biseautée (3) fait saillie de la butée transversale (23) et s'étend dans le prolongement du bras (2) selon la direction longitudinale du bras (2).

9. Dispositif (1) selon l'une quelconque des revendications précédentes, dans lequel les pièces biseautées (3, 4) sont coulissantes l'une par rapport à l'autre dans la direction longitudinale du bras (2).

10. Assemblage de garde-corps comprenant un dispositif (1) de jonction à degré variable conforme à l'une quelconque des revendications précédentes.
